(19) **Europäisches Patentamt / European Patent Office / Office européen des brevets**

(11) **EP 4 772 912 A1**

(12) # EUROPEAN PATENT APPLICATION
published in accordance with Art. 153(4) EPC

(43) Date of publication:
**08.07.2026 Bulletin 2026/28**

(21) Application number: **24859331.1**

(22) Date of filing: **02.08.2024**

(51) International Patent Classification (IPC):
**G01T 1/20** $^{(2006.01)}$ **G01T 1/161** $^{(2006.01)}$

(52) Cooperative Patent Classification (CPC):
**G01T 1/161; G01T 1/20**

(86) International application number:
**PCT/JP2024/027663**

(87) International publication number:
**WO 2025/047289 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.08.2023 JP 2023137967**

(71) Applicant: **NATIONAL INSTITUTES FOR
QUANTUM SCIENCE
AND TECHNOLOGY
Chiba-shi, Chiba 263-8555 (JP)**

(72) Inventors:
- **YOSHIDA, Eiji**
  **Chiba-shi, Chiba 263-8555 (JP)**
- **YAMAYA, Taiga**
  **Chiba-shi, Chiba 263-8555 (JP)**

(74) Representative: **Plasseraud IP
104 Rue de Richelieu
CS92104
75080 Paris Cedex 02 (FR)**

(54) **SIGNAL PROCESSING DEVICE, SIGNAL PROCESSING METHOD, POSITRON EMISSION TOMOGRAPHY DEVICE, AND CONFIGURATION METHOD**

(57) To achieve a signal processing device capable of calculating a detection time when a radiation detection device detects radiation, while taking into account characteristics of the radiation detection device, a signal processing device (3) for processing an output signal from a radiation detection device (2) including: scintillators that emit fluorescence responsive to incident radiation; and light-receiving elements that detect fluorescence, includes a processor carrying out: a specification process of specifying, from the output signal, detection times when the light-receiving elements detect fluorescence emitted by the scintillators and imparted energies imparted to the light-receiving elements; and a calculation process of calculating, as a detection time when the radiation detection device detects fluorescence, a weighted average of the detection times when the light-receiving elements detect fluorescence, wherein an n-th power (where n is a real number greater than 1) of the energies corresponding to the light-receiving elements is used as a weight.

FIG. 1

## Description

Technical Field

The present invention relates to a technique for processing a signal indicating that radiation has been detected in a radiographic imaging apparatus which generates a tomographic image of a living body.

Background Art

A positron emission tomography apparatus that generates a tomographic image of a living body by detecting gamma rays emitted from inside the living body is widely used. In the positron emission tomography apparatus, a radiation detection device in which detection units each including a scintillator for converting radiation (gamma rays) into light (fluorescence) and a light-receiving element for detecting the light resulting from the conversion by the scintillator are arranged in a matrix manner is generally used to detect gamma rays.

In order to improve the image quality of a tomographic image, it is important to improve time resolution of the radiation detection device. The time resolution of the radiation detection device is affected by the accuracy of a detection time at which the radiation detection device has detected fluorescence.

Non-patent Literature 1 discloses a signal processing device that calculates, as a detection time T at which a radiation detection device has detected radiation, an average detection time obtained by weighting, with imparted energies imparted to respective ones of a plurality of light-receiving elements included in the radiation detection device, detection times at which the respective ones of the plurality of light-receiving elements have detected fluorescence.

Citation List

[Non-patent Literature]

[Non-patent Literature 1]

Dam, H. T. van, Borghi, G., Seifert, S. & Schaart, D. R. Sub-200 ps CRT in monolithic scintillator PET detectors using digital SiPM arrays and maximum likelihood interaction time estimation. Phys Med Biol 58, 3243-3257 (2013).

Summary of Invention

Technical Problem

There exist various types of radiation detection devices that differ in the type and arrangement of scintillators, the type and arrangement of light-receiving elements, the presence or absence of a reflection material, the type of the reflection material, and the like, and such radiation detection devices have different characteristics. However, as a method for calculating the detection time of the radiation detection device, a method which does not take into account the characteristics of the radiation detection device is used. Therefore, there is room for improving the time resolution of the radiation detection device by optimizing the method of calculating the detection time of the radiation detection device.

An aspect of the present invention is attained in light of the above problem. An object of the aspect of the present invention is to achieve a signal processing device that is capable of calculating a detection time at which a radiation detection device has detected radiation, while taking into account the characteristics of the radiation detection device.

Solution to Problem

Provided is a signal processing device for processing an output signal from a radiation detection device, the radiation detection device including: a plurality of scintillators that emit fluorescence responsive to incident radiation; and a plurality of light-receiving elements that detect the fluorescence, the signal processing device including a processor that carries out: a specification process of specifying, from the output signal, (i) detection times at which respective ones of the light-receiving elements have detected fluorescence emitted by any of the scintillators and (ii) imparted energies imparted to the respective ones of the light-receiving elements; and a calculation process of calculating, as a detection time at which the radiation detection device has detected the fluorescence, a weighted average of the detection times at which the respective ones of the light-receiving elements have detected the fluorescence, wherein an n-th power (where n is a real number greater than 1) of the energies corresponding to the light-receiving elements is used as a weight.

Advantageous Effects of Invention

According to an aspect of the present invention, it is possible to achieve a signal processing device that is capable of calculating a detection time at which a radiation detection device has detected radiation, while taking into account the characteristics of the radiation detection device.

Brief Description of Drawings

Fig. 1 is a view illustrating an outline of a radiographic imaging apparatus in accordance with Embodiment 1 of the present invention.
Fig. 2 is a view illustrating a configuration of the radiographic imaging apparatus in accordance with Embodiment 1 of the present invention.
Fig. 3 is a view illustrating a configuration of a radiation detection device in accordance with Embodiment 1 of the present invention.
Fig. 4 is a flowchart illustrating a flow of a signal processing method carried out by a signal processing device in accordance with Embodiment 1 of the present invention.
Fig. 5 is a view illustrating a configuration of a radiographic imaging apparatus in accordance with Embodiment 2 of the present invention.

Description of Embodiments

Embodiment 1

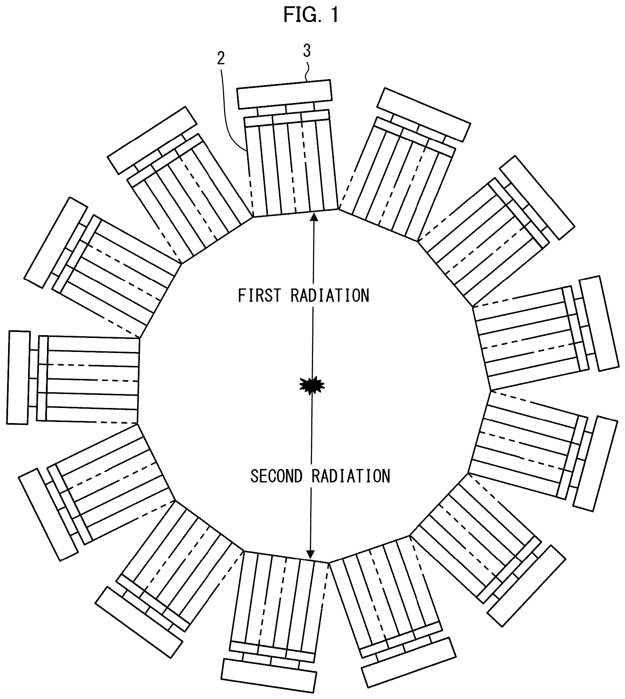

The following will describe an embodiment of the present invention in detail with reference to Figs. 1 to 4.

(Outline of radiographic imaging apparatus)

An outline of a radiographic imaging apparatus 1 in accordance with an embodiment of the present invention will be described with reference to Fig. 1. Fig. 1 is a view for describing the outline of the radiographic imaging apparatus 1.
As illustrated in Fig. 1, in the radiographic imaging apparatus 1, radiation detection devices 2 that detect radiation emitted from inside a living body and signal processing devices 3 that process respective ones of output signals from the corresponding radiation detection devices 2 are arranged in a ring shape. As an example, the radiographic imaging apparatus 1 is a positron emission tomography (PET) apparatus that detects gamma rays, which are one type of radiation emitted from inside a living body, and generates a tomographic image of the living body on the basis of the detected gamma rays.
First and second radiations emitted from a radiation source inside a living body in mutually opposite directions are incident respectively on two opposite radiation detection devices 2 among the radiation detection devices 2 that are arranged in a ring shape. The radiation detection devices 2 each include: a plurality of scintillators that convert incident radiation into fluorescence; and a plurality of light-receiving elements that detect fluorescence. Upon detecting fluorescence, the light-receiving elements each output a signal indicating the detection of fluorescence. The signal processing device 3 calculates, on the basis of the signal, a detection time $T$ at which the radiation detection device 2 has detected radiation and imparted energy $E$.
The conventional radiographic imaging apparatus set, as the detection time $T$, a time at which a light-receiving element that had first detected fluorescence detected the fluorescence. Alternatively, the conventional radiographic imaging apparatus selected a plurality of light-receiving elements that had detected fluorescence earlier, and set, as the detection time $T$, an average detection time obtained by weighting detection times at which the respective ones of the selected light-receiving elements had detected the fluorescence with the imparted energies imparted to the respective light-receiving elements. However, such methods for calculating the detection time $T$ did not accurately take into account the characteristics of the radiation detection device 2.
In contrast, the radiographic imaging apparatus 1 selects m light-receiving elements (where m is an arbitrary integer greater than or equal to 2) in an order in which a fluorescence detection time is earlier or selects a plurality of light-receiving elements to which imparted energies of high magnitude are imparted, and sets, as the detection time $T$, an average detection time obtained by weighting the detection times at which the respective ones of the selected light-receiving elements have detected the fluorescence with the n-power of the imparted energies imparted to the respective light-receiving elements. The value of n only needs to be a real number greater than 1, but is particularly preferably an integer greater than 1. In addition, the value of n is arbitrarily set with the characteristics of the radiation detection device 2 taken into account. Specifically, this makes it possible to calculate the detection time T while taking into account the characteristics of the radiation detection device 2, thereby contributing to an improvement in the time resolution of the radiation detection device 2. Further, by virtue of the improvement in the time resolution of the radiation detection device 2, it is possible to achieve the radiographic imaging apparatus 1 in which the image quality of a tomographic image is improved.

(Configuration of radiographic imaging apparatus)

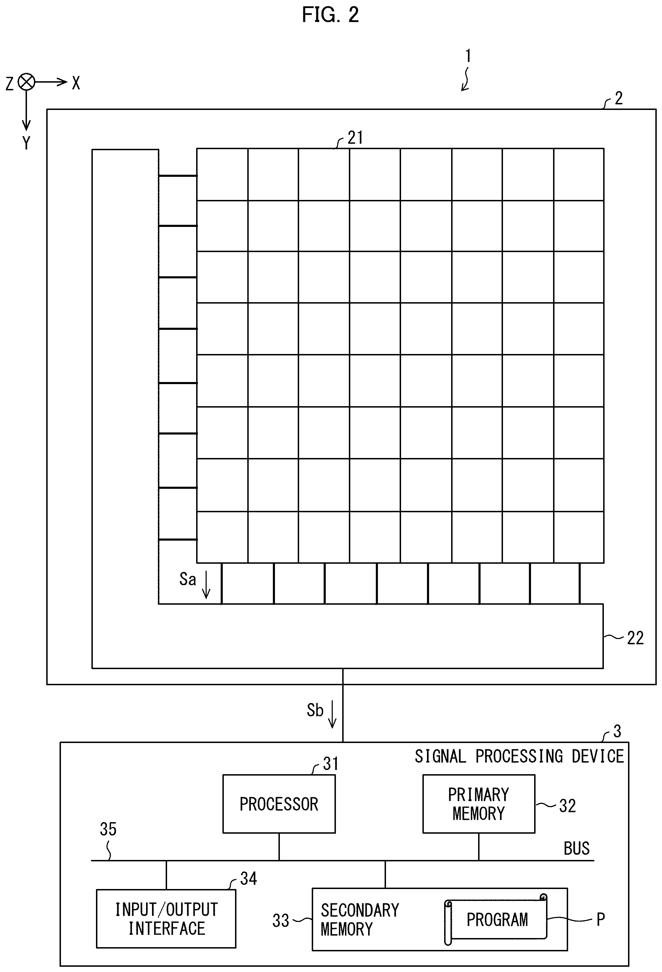

A configuration of the radiographic imaging apparatus 1 in accordance with an embodiment of the present invention will be described with reference to Fig. 2. Fig. 2 is a view illustrating the configuration of the radiographic imaging apparatus 1. In Fig. 2, in order to prevent the drawing from becoming complicated, depicted are only one radiation detection device 2 and only one signal processing device 3 among the radiation detection devices 2 and the signal processing devices 3 that are arranged in a ring shape in the radiographic imaging apparatus 1 illustrated in Fig. 1.

The radiation detection device 2 is used to detect radiation emitted from inside a living body in the radiographic imaging apparatus 1. The radiation detection device 2 includes a detection unit 21 and a detection circuit 22.

The detection unit 21 includes a scintillator array 211 and a light-receiving element array 212.

The scintillator array 211 includes a plurality of scintillators. Each of the scintillators is a conversion element (for example, a crystal) that converts radiation (for example, gamma rays) into light (fluorescence). In the present embodiment, Fast-LGSO ($Ce:Lu_xGd_{(2-x)}SiO_5$) is used as each of the scintillators that constitute the scintillator array 211. Examples of other scintillator material include lutetium yttrium orthosilicate (LYSO), $Gd_3(Ga,Al)_5O_{12}(Ce)$ (GAGG), and lutetium fine silicate (LFS).

The light-receiving element array 212 includes a plurality of light-receiving elements that are arranged in a matrix manner. Each of the light-receiving elements amplifies the fluorescence emitted by a corresponding one of the scintillators and then outputs an analog detection signal Sa. In the present embodiment, as the light-receiving elements that constitute the light-receiving element array 212, a multi pixel photon counter (MPPC), which is one type of silicon photo multiplier (SiPM), is used. Alternatively, other SiPM can be used.

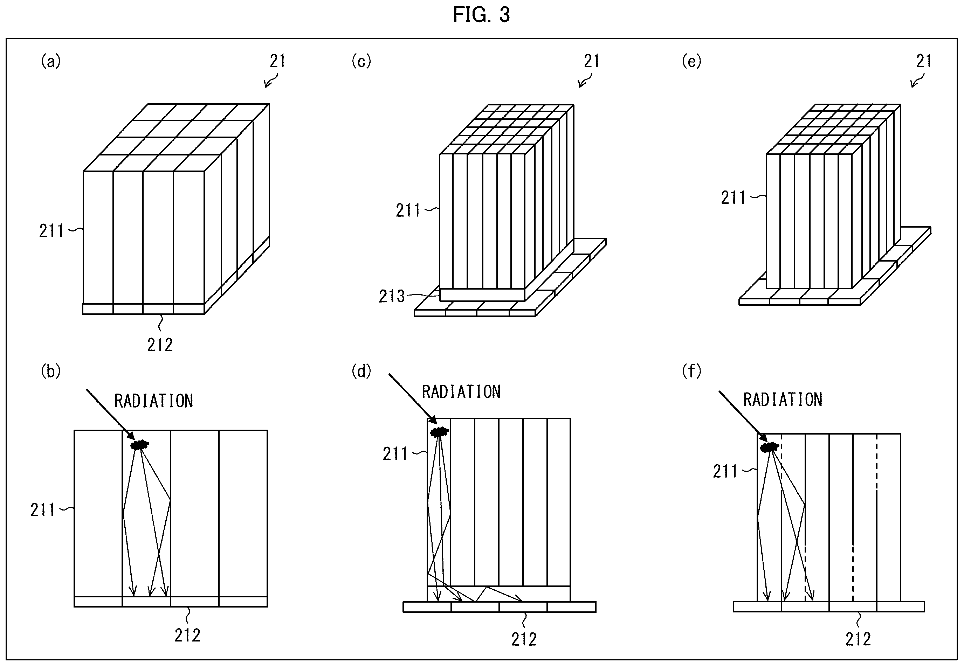

The scintillator array 211 and the light-receiving element array 212 described above are optically connected. For example, in the detection unit 21, the scintillator array 211 and the light-receiving element array 212 are such that bottom surfaces of the scintillators constituting the scintillator array 211 and light-receiving surfaces of the light-receiving elements constituting the light-receiving element array are optically connected. In addition, in the detection unit 21, the scintillator array 211 and the light-receiving element array 212 are optically connected via a light guide. A configuration example of the detection unit 21 in which the scintillator array 211 and the light-receiving element array 212 are optically connected as described above will be described with reference to Fig. 3. Fig. 3 is a view illustrating an example of the configuration of the detection unit 21 included in the radiation detection device 2. (a), (c), and (e) of Fig. 3 are perspective views of the detection unit 21, and (b), (d), and (f) of Fig. 3 are plan views of the detection unit 21.

As illustrated in (a) of Fig. 3, as an example, the detection unit 21 is configured such that the scintillators constituting the scintillator array 211 and the light-receiving elements constituting the light-receiving element array 212 are optically connected on a one-to-one basis. In the detection unit 21 configured as described above, a reflection material may be disposed, as appropriate, between the scintillators constituting the scintillator array 211, as illustrated in (b) of Fig. 3. In Fig. 3, a region represented by a solid line between the scintillators indicates that a reflection material is disposed therebetween, and a region represented by a dotted line indicates that the scintillators are optically connected.

The radiation incident on the scintillator of the detection unit 21 having the configurations as illustrated in (a) and (b) of Fig. 3 is converted into fluorescence, and the fluorescence reaches the light-receiving surface of the light-receiving element that is optically connected to that scintillator. Similarly, the light-receiving element that has detected the fluorescence outputs, to the detection circuit 22, an analog detection signal Sa corresponding to the fluorescence.

Further, as illustrated in (c) of Fig. 3, the detection unit 21 may be configured such that a light guide 213 is disposed between the scintillator array 211 and the light-receiving element array 212. In this configuration, the scintillator array 211 and the light-receiving element array 212 are optically connected via the light guide 213. Here, the light guide 213 plays a role of distributing fluorescence received from the scintillators to the light-receiving elements. Note that, also in the detection unit 21 configured as described above, a reflection material may be disposed, as appropriate, between the scintillators constituting the scintillator array 211, as illustrated in (d) of Fig. 3.

The radiation incident on the scintillator of the detection unit 21 having the configuration as illustrated in (c) of Fig. 3 and (d) of Fig. 3 is converted into fluorescence, and the fluorescence reaches the light guide 213. The fluorescence that has reached the light guide 213 is distributed to the light-receiving surfaces of the light-receiving elements. The light-receiving element that has detected the distributed fluorescence outputs, to the detection circuit 22, an analog detection signal Sa corresponding to the fluorescence.

Further, as illustrated in (e) of Fig. 3, the detection unit 21 may be configured such that four scintillators are optically connected to each of the light-receiving elements constituting the light-receiving element array 212. In this case, the area of the light-receiving surface of each of the light-receiving elements is four times the area of the bottom surface of each of the scintillators constituting the scintillator array 211. In the detection unit 21 configured as described above, a reflection material may be disposed, as appropriate, in some or all regions between the scintillators, as illustrated in (f) of Fig. 3. In addition, adjacent regions between which no reflection material is disposed may be optically connected to each other by an optical adhesive or the like.

The radiation incident on the scintillator of the detection unit 21 having the configuration as illustrated in (e) of Fig. 3 and (f) of Fig. 3 is converted into fluorescence, and the fluorescence is reflected in the region where the reflection material is disposed or passes through another adjacent scintillator in the region where the scintillators are optically connected, and then reaches the light-receiving surfaces of the light-receiving elements. The light-receiving element that has detected the fluorescence outputs, to the detection circuit 22, an analog detection signal Sa corresponding to the fluorescence.

The description of the configuration of the radiographic imaging apparatus 1 will be continued with reference to Fig. 2.

The detection circuit 22 performs AD conversion on the analog detection signal Sa output from the light-receiving element that has detected the fluorescence, and outputs a digital detection signal Sb. The digital detection signal Sb includes an element identifier i, imparted energy $E_i$, and a detection time $T_i$.

The element identifier i is information that identifies a light-receiving element which has detected fluorescence. The element identifier i is, for example, an element number that is assigned to each light-receiving element array constituting the light-receiving element array 212. Hereinafter, the light-receiving element represented by the element identifier i is referred to as a light-receiving element $212U_i$.

As illustrated in Fig. 2, in a case where the detection unit 21 has the light-receiving element array 212 that is constituted by 64 ($8 \times 8 = 64$) light-receiving elements, element numbers 1 to 64 are assigned respectively to the 64 light-receiving elements. In this case, the digital detection signal Sb includes the element identifier i that is any element number among the element numbers 1 to 64. A case where the element identifier i is an element number 4 indicates that a light-receiving element $212U_4$ to which the element number 4 is assigned has detected fluorescence.

The imparted energy $E_i$ represents imparted energy that is imparted to the light-receiving element $212U_i$ which is represented by the element identifier i included in the digital detection signal Sb. The imparted energy $E_i$ is derived from energy of fluorescence detected by the light-receiving element $212U_i$.

The detection time $T_i$ represents a detection time at which the light-receiving element $212U_i$ that is represented by the element identifier i included in the digital detection signal Sb has detected fluorescence.

Note that, in a case where the element identifier i indicates a plurality of element numbers, the digital detection signal Sb includes a detection time $T_i$ and imparted energy $E_i$ of each of the light-receiving elements $212U_i$ represented by the element numbers.

Here, the digital detection signal Sb is generated for each light-receiving element $212U_i$ by processing the analog detection signal Sa in units of one event, that is, a time width (for example, on the order of picoseconds (ps)) corresponding to one incidence of radiation. This is to process more events on the radiation detection device 2.

The signal processing device 3 is a device that processes the digital detection signal Sb output from the detection circuit 22. As an example, the signal processing device 3 is a device that calculates a detection time T at which the radiation detection device 2 has detected radiation on the basis of the digital detection signal Sb output from the detection circuit 22.

The signal processing device 3 includes a processor 31, a primary memory 32, a secondary memory 33, an input/output interface 34, and a bus 35. The processor 31, the primary memory 32, the secondary memory 33, and the input/output interface 34 are connected to each other via the bus 35.

The secondary memory 33 stores (stores in a nonvolatile manner) a signal processing program P (for executing a signal processing method which will be described later) and a mathematical expression (for calculating a detection time T which will be described later). The processor 31 loads, onto the primary memory 32, the signal processing program P stored in the secondary memory 33. Then, the processor 31 executes processes included in the signal processing method, which will be described later, in accordance with an instruction included in the signal processing program P that is loaded onto the primary memory 32.

Examples of a device that can be used as the processor 31 can include a central processing unit (CPU). Further, examples of a device that can be used as the primary memory 32 can include a semiconductor random access memory (RAM). Further, examples of a device that can be used as the secondary memory 33 can include a hard disk drive (HDD).

An input device and/or an output device is connected to the input/output interface 34. Examples of the input device connected to the input/output interface 34 include a keyboard and the like. Further, examples of the output device connected to the input/output interface 34 include a display.

Examples of the interface that can be used as the input/output interface 34 can include a peripheral component interconnect (PCI) interface, a universal serial bus (USB), and the like.

Note that the signal processing program P can be recorded on a computer-readable, non-transitory, tangible recording medium. The recording medium may be the secondary memory 33 or may be other recording medium. For example, a tape, a disk, a card, a semiconductor memory, a programmable logic circuit, or the like can be used as the other recording medium.

(Signal processing method)

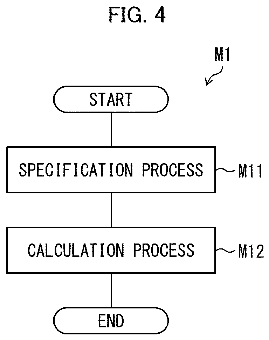

A signal processing method M1 carried out by the signal processing device 3 will be described with reference to Fig. 4. Fig. 4 is a flowchart illustrating a flow of the signal processing method M1.

As illustrated in Fig. 4, the signal processing method M1 includes a specification process M11 and a calculation process M12. The timing at which the signal processing device 3 executes each process of the signal processing method M1 can be arbitrarily set. For example, the signal processing device 3 may execute each process illustrated in Fig. 4 at predetermined time intervals (for example, one second) or may execute each time the signal processing device 3 receives the digital detection signal Sb from the detection circuit 22 of the radiation detection device 2.

The specification process M11 is a process for allowing the signal processing device 3 to specify information pertaining to light-receiving elements that have detected fluorescence. In the specification process M11, the processor 31 of the signal processing device 3 specifies, from the digital detection signal Sb that has been received from the detection circuit 22 of the radiation detection device 2, the element identifier i, the detection time $T_i$ at which the light-receiving element $212U_i$ has detected fluorescence, and the imparted energy $E_i$ of the light-receiving element $212U_i$ as the information pertaining to light-receiving elements that have detected fluorescence.

The calculation process M12 is a process for calculating the detection time T at which the radiation detection device 2 has detected radiation. In the calculation process M12, the processor 31 of the signal processing device 3 calculates the detection time T at which the radiation detection device 2 has detected radiation, on the basis of expression (1) and the information, which has been specified in the specification process M11, pertaining to light-receiving elements that have detected fluorescence.

First, the processor 31 of the signal processing device 3 selects m light-receiving elements (where m is an arbitrary natural number greater than or equal to 1) from among the light-receiving elements that have detected fluorescence, and extracts the element identifier i, which identifies each of the m light-receiving elements, the detection time $T_i$, and the imparted energy $E_i$ from the information, which has been specified in the specification process M11, pertaining to light-receiving elements that have detected fluorescence. The processor 31 may select the m light-receiving elements in an order in which the detection time $T_i$ is earlier from among the light-receiving elements that have detected fluorescence, or may select the m light-receiving elements in decreasing order of the magnitude of the imparted energy $E_i$ from among the light-receiving elements that have detected fluorescence.

Further, the processor 31 of the signal processing device 3 assigns a new element identifier k to the selected m light-receiving elements. For example, the element identifier k is an element number that is assigned to a light-receiving element. In a case where the m light-receiving elements are selected in the order in which the detection time $T_i$ is earlier, the m light-receiving elements are assigned element numbers 1 to m in the order in which the detection time $T_i$ is earlier. In a case where the m light-receiving elements are selected in decreasing order of the magnitude of the imparted energy $E_i$, the m light-receiving elements are assigned the element numbers 1 to m in decreasing order of the magnitude of the imparted energy $E_i$. Hereinafter, a light-receiving element represented by the element identifier k is referred to as a light-receiving element $212U_k$, a time at which the light-receiving element $212U_k$ has detected fluorescence is referred to as a detection time $T_k$, and an imparted energy imparted to the light-receiving element $212U_k$ is denoted as $E_k$.

Next, the processor 31 of the signal processing device 3 calculates the detection time T at which the radiation detection device 2 has detected radiation by substituting the detection time $T_k$ and the imparted energy $E_k$ into the following expression (1):

$$T = \frac{\sum_{k=1}^{m} T_k \times E_k^n}{\sum_{k=1}^{m} E_k^n} \quad \cdots (1)$$

where:

k is an element identifier;
T is a detection time at which the radiation detection device has detected fluorescence;
$T_k$ is a detection time at which a light-receiving element has detected fluorescence;
$E_k$ is an imparted energy to a light-receiving element; and
m is the number of light-receiving elements used to calculate the detection time at which the radiation detection device has detected fluorescence.

Here, the value of n only needs to be a real number greater than 1, and is particularly preferably an integer greater than 1. As an example, the value of n varies depending on the characteristics of the radiation detection device 2. For example, in a case where, in the radiation detection device 2, fluorescence generated from incident radiation spreads and is detected by a plurality of light-receiving elements, the value of m is increased, and the value of n is set to a real number greater than or equal to 3. In a case where the fluorescence does not spread and is detected by one light-receiving element (for example, (a) to (d) of Fig. 3), the values of m and n are set to real numbers close to 1.

(Example of radiographic imaging apparatus)

The following will describe Example of the radiographic imaging apparatus 1.

The radiation detection devices 2 included in the radiographic imaging apparatuses 1 in accordance with Example and Comparative Example have the configuration illustrated in (a) of Fig. 3 and (b) of Fig. 3. As the scintillator array 211, a scintillator array constituted by 196 ($14 \times 14 = 196$) scintillators was used. As the scintillator, a prismatic Fast-LGSO having a height of 1.5 mm and having a square bottom surface with a length of 1.45 mm on each side was used. Further, as the light-receiving element array 212, an MPPC having a square light-receiving surface with a length of 3 mm on each side was used. In addition, a radiation detection device using a specular reflection material (ESR) as a reflection material disposed between the scintillator arrays 211 and a radiation detection device using a diffuse reflection material (Lumirror) as the reflection material were used as the radiation detection device 2.

In the present Example, the detection time T at which the above-described radiation detection device 2 had detected radiation was calculated using varying values of m and n in the expression (1) described above, and the time resolution was evaluated. In addition, in the present Example, the evaluation of the time resolution on the radiation detection device 2 was performed for a case in which m light-receiving elements were selected in an order in which a fluorescence detection time is earlier (TS-EEWA) and for a case in which m light-receiving elements were selected in decreasing order of the magnitude of imparted energy (ES-EEWA).

In the present Comparative Example, the detection time T at which the above-described radiation detection device 2 had detected radiation was calculated according to the following expression (2), and the time resolution of the radiation detection device 2 was evaluated using the detection time T. Note that, in the present Comparative Example, the evaluation was made only for the case in which m light-receiving elements were selected in an order in which a fluorescence detection time is earlier (TS-EEWA).

$$\mathrm{T} = \frac{\sum_{k=1}^{m} T_k \times E_k}{\sum_{k=1}^{m} E_k} \quad \cdots (2)$$

where:

k is an element identifier;
T is a detection time at which the radiation detection device has detected fluorescence;
$T_k$ is a detection time at which a light-receiving element has detected fluorescence;
$E_k$ is an imparted energy to a light-receiving element; and
m is the number of light-receiving elements used to calculate the detection time at which the radiation detection device has detected fluorescence.

Tables 1 and 2 show the results of evaluation of the time resolution of the radiation detection devices 2 included in the radiographic imaging apparatuses 1 in accordance with Example and Comparative Example. In the present Example and the Comparative Example, the time resolution was evaluated.

[Table 1]

Table 1

| m | Time resolution (ps) | | | |
|---|---|---|---|---|
| | Comparative Example | TS-EEWA | | |
| | | n = 2 | n = 3 | n = 4 |
| ESR | | | | |
| 1 | 250.2 | | | |
| 2 | 272.5 | 238.2 | 234.5 | 238.1 |
| 3 | 309 | 240.6 | 230.1 | 235.0 |
| 4 | 345.3 | 242.2 | 227.7 | 234.1 |
| 5 | 377.9 | 244.6 | 226.4 | 233.8 |
| 6 | 405.8 | 246.1 | 226.1 | 233.7 |
| Max | 648.1 | 253.8 | 226.0 | 233.6 |
| Lumirror | | | | |
| 1 | 231.9 | | | |
| 2 | 304.8 | 236.5 | 226.1 | 227.1 |
| 3 | 372.5 | 244.3 | 222.2 | 224.9 |
| 4 | 408.0 | 243.7 | 221.4 | 224.7 |
| Max | 589.5 | 250.9 | 221.2 | 224.7 |

[Table 2]

Table 2

| m | Time resolution (ps) | | | |
|---|---|---|---|---|
| | Comparative Example | ES-EEWA | | |
| | | n = 2 | n = 3 | n = 4 |
| ESR | | | | |
| 1 | 250.2 | | | |
| 2 | 272.5 | 242.5 | 232.9 | 236.7 |
| 3 | 309 | 240.3 | 228.0 | 234.1 |
| 4 | 345.3 | 243.4 | 227.2 | 233.9 |
| 5 | 377.9 | 242.9 | 226.0 | 233.7 |
| 6 | 405.8 | 243.7 | 225.7 | 253.6 |
| Max | 648.1 | 253.8 | 226.0 | 233.6 |
| Lumirror | | | | |
| 1 | 231.9 | | | |
| 2 | 304.8 | 238.4 | 223.9 | 225.8 |
| 3 | 372.5 | 238.1 | 220.9 | 224.6 |
| 4 | 408.0 | 242.1 | 221.1 | 224.7 |
| Max | 589.5 | 250.9 | 221.2 | 224.7 |

According to the radiographic imaging apparatus 1 in accordance with the embodiment, it can be seen from Tables 1 and 2 that the time resolution of the radiation detection device 2 is significantly improved in the cases in which the value of n in the expression (1) are set to n = 3 and n = 4. In addition, it can be seen from Tables 1 and 2 that optimum values of m and n are different depending on the type of the reflection material. That is, it can be seen that setting the values of m and n in accordance with the characteristics of the radiation detection device 2 is important for the improvement in the time resolution.

Embodiment 2

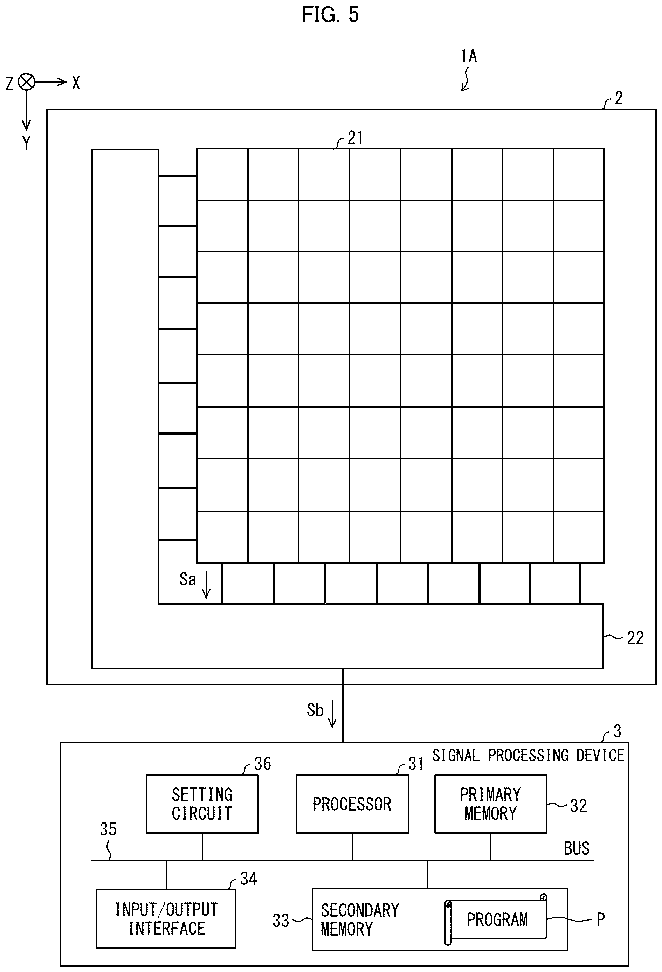

Another embodiment (Embodiment 2) of the present invention will be described with reference to Fig. 5. Fig. 5 is a view illustrating a configuration of a radiographic imaging apparatus 1A in accordance with Embodiment 2. Note that, for convenience, members having the same functions as those of the members described in the above embodiment are given respective identical reference numerals, and descriptions of those members are omitted.

(Configuration of radiographic imaging apparatus)

As illustrated in Fig. 5, the radiographic imaging apparatus 1A in accordance with Embodiment 2 of the present invention differs from the radiographic imaging apparatus 1 in accordance with Embodiment 1 in that the signal processing device 3 includes a setting circuit 36.
The setting circuit 36 is a circuit for setting the values of m and n in the expression (1) that is used to calculate the detection time T at which the radiation detection device 2 has detected radiation. As an example, the setting circuit 36 sets the values of m and n in accordance with the characteristics of the radiation detection device 2.

(Flow of setting method M2)

A setting method M2 carried out by the setting circuit 36 will be described. The setting method M2 includes a determination step M21 of optimizing the values of m and n included in the expression (1) in accordance with the characteristics of the radiation detection device 2. A timing at which the setting circuit 36 carries out the setting method M2 can be arbitrarily set so as to be a timing before the signal processing device 3 executes the processes for the signal processing method M1 described above. For example, the setting circuit 36 executes the processes for the setting method M2 when the radiation detection device 2 which is connected to the signal processing device 3 is changed to another radiation detection device.
The determination step M21 is a step of the setting circuit 36 optimizing the values of m and n in the expression (1) on the basis of information pertaining to the characteristics of the radiation detection device 2. In the determination step M21, the setting circuit 36 optimizes the values of m and n with reference to the information pertaining to the characteristics of the radiation detection device 2 which is input from the input device of the input/output interface 34. Here, the information pertaining to the characteristics of the radiation detection device 2 include at least one of the following: the types of the scintillators constituting the scintillator array 211, the light-receiving elements constituting the light-receiving element array 212, and the reflection material disposed between the scintillators; and a positional relationship between the scintillator array 211 and the light-receiving element array 212 (see Fig. 3). In this way, it is possible to optimize the values of m and n in the expression (1) in accordance with the characteristics of the radiation detection device 2. Thus, it is possible to calculate an optimum detection time T regardless of the type of the radiation detection device 2. This allows the same signal processing device 3 to be used even in a case where the radiation detection devices 2 having varying characteristics are used, thereby providing high versatility.
The processor 31 of the signal processing device 3 calculates the detection time T at which the radiation detection device 2 has detected radiation, on the basis of the expression (1) that uses the values of m and n which have been optimized in the above-described determination step M21.

(Summary)

A signal processing device in accordance with a first aspect of the present embodiment is a signal processing device for processing an output signal from a radiation detection device, the radiation detection device including: a plurality of scintillators that emit fluorescence responsive to incident radiation; and a plurality of light-receiving elements that detect the fluorescence, the signal processing device including a processor that carries out: a specification process of specifying, from the output signal, (i) detection times at which respective ones of the light-receiving elements have detected fluorescence emitted by any of the scintillators and (ii) imparted energies imparted to the respective ones of the light-receiving elements; and a calculation process of calculating, as a detection time at which the radiation detection device has detected the fluorescence, a weighted average of the detection times at which the respective ones of the light-receiving elements have detected the fluorescence, wherein an n-th power (where n is a real number greater than 1) of the energies corresponding to the light-receiving elements is used as a weight.
With the above configuration, it is possible to calculate an optimum detection time that contributes to an improvement in the time resolution of the radiation detection device.
In a second aspect of the present embodiment, the signal processing device is configured, in the above-described first aspect, such that, in the calculation process, the processor calculates the detection time at which the radiation detection device has detected the fluorescence, according to the following expression (1):

$$T = \frac{\sum_{k=1}^{m} T_k \times E_k^n}{\sum_{k=1}^{m} E_k^n} \quad \cdots (1)$$

where:

k is an element identifier;
T is a detection time at which the radiation detection device has detected fluorescence;
$T_k$ is a detection time at which a light-receiving element has detected fluorescence;
$E_k$ is an imparted energy to a light-receiving element; and
m is the number of light-receiving elements used to calculate the detection time at which the radiation detection device has detected fluorescence.

With the above configuration, it is possible to calculate an optimum detection time that contributes to an improvement in the time resolution of the radiation detection device.

In a third aspect of the present embodiment, the signal processing device is configured, in the above-described first or second aspect, such that, in the specification process, the processor selects m light-receiving elements (where m is an integer greater than or equal to 2) from among the plurality of light-receiving elements that have detected the fluorescence, and the processor specifies, on the basis of the detection time $T_k$ and the imparted energy $E_k$ corresponding to each of the selected m light-receiving elements, the detection time at which the radiation detection device has detected the fluorescence.

With the above configuration, it is possible to calculate the detection time at which the radiation detection device has detected fluorescence, on the basis of information pertaining to the m light-receiving elements, and it is thus possible to calculate the detection time efficiently.

In a fourth aspect of the present embodiment, the signal processing device is configured, in the above-described third aspect, such that, in the specification process, the processor selects the m light-receiving elements in an order in which the detection time is earlier from among the plurality of light-receiving elements that have detected the fluorescence.

With the above configuration, it is possible to calculate, with high accuracy, the detection time at which the radiation detection device has detected fluorescence in a case where a relationship between the imparted energy imparted to each of the light-receiving elements and the detection time of each of the light-receiving element is linear.

In a fifth aspect of the present embodiment, the signal processing device is configured, in the above-described third aspect, such that, in the calculation process, the processor selects the m light-receiving elements in decreasing order of a magnitude of the imparted energy from among the plurality of light-receiving elements that have detected the fluorescence.

With the above configuration, it is possible to calculate, with high accuracy, the detection time at which the radiation detection device has detected fluorescence even in a case where the relationship between the detection time at which each of the light-receiving elements has detected and the imparted energy imparted to each of the light-receiving elements is not linear.

A positron emission tomography apparatus in accordance with a sixth aspect of the present embodiment includes: the signal processing device described in any one of the first to fifth aspects; and the radiation detection device.

With the above configuration, it is possible to acquire a tomographic image of a living body with improved image quality.

A setting method in accordance with a seventh aspect of the present embodiment is a setting method for, in a signal processing device for processing an output signal from a radiation detection device including: a plurality of scintillators that emit fluorescence responsive to incident radiation; and a plurality of light-receiving elements that detect the fluorescence, setting a mathematical expression for calculating a detection time at which the radiation detection device has detected the fluorescence, the method including a determination step of optimizing values of m and n included in the following expression (1) in accordance with characteristics of the radiation detection device by using, as the mathematical expression, the following expression (1):

$$T = \frac{\sum_{k=1}^{m} T_k \times E_k^n}{\sum_{k=1}^{m} E_k^n} \quad \cdots (1)$$

where:

k is an element identifier;

T is a detection time at which the radiation detection device has detected fluorescence;

$T_k$ is a detection time at which a light-receiving element has detected fluorescence;

$E_k$ is an imparted energy to a light-receiving element; and

m is the number of light-receiving elements used to calculate the detection time at which the radiation detection device has detected fluorescence.

With the above configuration, it is possible to calculate the detection time at which the radiation detection device has detected fluorescence in accordance with the characteristics of the radiation detection device.

A signal processing method in accordance with an eighth aspect of the present embodiment is a signal processing method for processing an output signal from a radiation detection device, the radiation detection device including: a plurality of scintillators that emit fluorescence responsive to incident radiation; and a plurality of light-receiving elements that detect the fluorescence, the signal processing method including: a specification process of specifying, from the output signal, (i) detection times at which respective ones of the light-receiving elements have detected fluorescence emitted by any of the scintillators and (ii) imparted energies imparted to the respective ones of the light-receiving elements; and a calculation process of calculating, as a detection time at which the radiation detection device has detected the fluorescence, a weighted average of the detection times at which the respective ones of the light-receiving elements have detected the fluorescence, wherein an n-th power (where n is a real number greater than 1) of the energies corresponding to the light-receiving elements is used as a weight.

With the above configuration, it is possible to calculate an optimum detection time that contributes to an improvement in the time resolution of the radiation detection device.

(Additional remarks)

The present invention is not limited to the embodiments, but can be altered by a skilled person in the art within the scope of the claims. The present invention also encompasses, in its technical scope, any embodiment derived by combining technical means disclosed in differing embodiments.

Reference Signs List

1: radiographic imaging apparatus
2: radiation detection device
3: signal processing device
211: scintillator array
212: light-receiving element array

**Claims**

1. A signal processing device for processing an output signal from a radiation detection device, the radiation detection device including: a plurality of scintillators that emit fluorescence responsive to incident radiation; and a plurality of light-receiving elements that detect the fluorescence,
the signal processing device comprising a processor that carries out:

a specification process of specifying, from the output signal, (i) detection times at which respective ones of the light-receiving elements have detected fluorescence emitted by any of the scintillators and (ii) imparted energies imparted to the respective ones of the light-receiving elements; and
a calculation process of calculating, as a detection time at which the radiation detection device has detected the fluorescence, a weighted average of the detection times at which the respective ones of the light-receiving elements have detected the fluorescence, wherein an n-th power (where n is a real number greater than 1) of the energies corresponding to the light-receiving elements is used as a weight.

2. The signal processing device according to claim 1, wherein, in the calculation process, the processor calculates the detection time at which the radiation detection device has detected the fluorescence, according to the following expression (1):

$$T = \frac{\sum_{k=1}^{m} T_k \times E_k^n}{\sum_{k=1}^{m} E_k^n} \quad \cdots (1)$$

where:

k is an element identifier;
T is a detection time at which the radiation detection device has detected fluorescence;
$T_k$ is a detection time at which a light-receiving element has detected fluorescence;
$E_k$ is an imparted energy to a light-receiving element; and
m is the number of light-receiving elements used to calculate the detection time at which the radiation detection device has detected fluorescence.

3. The signal processing device according to claim 2, wherein, in the specification process, the processor selects m light-receiving elements (where m is an integer greater than or equal to 2) from among the plurality of light-receiving elements that have detected the fluorescence, and the processor specifies, on a basis of the detection time $T_k$ and the imparted energy $E_k$ corresponding to each of the selected m light-receiving elements, the detection time T, calculated according to the expression (1), at which the radiation detection device has detected the fluorescence.

4. The signal processing device according to claim 3, wherein, in the specification process, the processor selects the m light-receiving elements in an order in which the detection time is earlier from among the plurality of light-receiving elements that have detected the fluorescence.

5. The signal processing device according to claim 3, wherein, in the specification process, the processor selects the m light-receiving elements in decreasing order of a magnitude of the imparted energy from among the plurality of light-receiving elements that have detected the fluorescence.

6. A positron emission tomography apparatus comprising:

the signal processing device recited in any one of claims 1 to 5; and
the radiation detection device.

7. A setting method for, in a signal processing device for processing an output signal from a radiation detection device including: a plurality of scintillators that emit fluorescence responsive to incident radiation; and a plurality of light-receiving elements that detect the fluorescence, setting a mathematical expression for calculating a detection time at which the radiation detection device has detected the fluorescence, the method comprising a determination step of optimizing values of m and n included in the following expression (1) in accordance with characteristics of the radiation detection device by using, as the mathematical expression, the following expression (1):

$$T = \frac{\sum_{k=1}^{m} T_k \times E_k^n}{\sum_{k=1}^{m} E_k^n} \quad \cdots (1)$$

where:

k is an element identifier;
T is a detection time at which the radiation detection device has detected fluorescence;
$T_k$ is a detection time at which a light-receiving element has detected fluorescence;
$E_k$ is an imparted energy to a light-receiving element; and
m is the number of light-receiving elements used to calculate the detection time at which the radiation detection device has detected fluorescence.

8. A signal processing method for processing an output signal from a radiation detection device, the radiation detection device including: a plurality of scintillators that emit fluorescence responsive to incident radiation; and a plurality of light-receiving elements that detect the fluorescence,

the signal processing method including:

a specification process of specifying, from the output signal, (i) detection times at which respective ones of the light-receiving elements have detected fluorescence emitted by any of the scintillators and (ii) imparted energies imparted to the respective ones of the light-receiving elements; and

a calculation process of calculating, as a detection time at which the radiation detection device has detected the fluorescence, a weighted average of the detection times at which the respective ones of the light-receiving elements have detected the fluorescence, wherein an n-th power (where n is a real number greater than 1) of the energies corresponding to the light-receiving elements is used as a weight.

## FIG. 1

FIRST RADIATION

SECOND RADIATION

# FIG. 2

FIG. 3

EP 4 772 912 A1

FIG. 4

M1

```
      ┌──────────────┐
      │    START     │
      └──────────────┘
             │
   ┌─────────────────────┐
   │ SPECIFICATION PROCESS │ ～M11
   └─────────────────────┘
             │
   ┌─────────────────────┐
   │ CALCULATION PROCESS  │ ～M12
   └─────────────────────┘
             │
      ┌──────────────┐
      │     END      │
      └──────────────┘
```

# FIG. 5

## INTERNATIONAL SEARCH REPORT

| International application No. |
|---|
| **PCT/JP2024/027663** |

| A. | CLASSIFICATION OF SUBJECT MATTER |
|---|---|

*G01T 1/20*(2006.01)i; *G01T 1/161*(2006.01)i
FI:   G01T1/20 F; G01T1/20 E; G01T1/20 G; G01T1/161 C

According to International Patent Classification (IPC) or to both national classification and IPC

| B. | FIELDS SEARCHED |
|---|---|

Minimum documentation searched (classification system followed by classification symbols)

G01T1/20; G01T1/161

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2018-44952 A (GENERAL ELECTRIC COMPANY) 22 March 2018 (2018-03-22) paragraphs [0033]-[0035], fig. 5 | 1-8 |
| A | JP 2010-527021 A (KONINKLIJKE PHILIPS ELECTRONICS N.V) 05 August 2010 (2010-08-05) paragraphs [0006], [0038] | 1-8 |
| A | Sub-200 ps CRT in monolithic scintillator petdetectors using digital SiPM arrays and maximum likelihood interaction timeestimation, PHYSICS IN MEDICINE AND BIOLOGY, 58(2013), 24 April 2013, pp. 3243-3257 p. 3249 2.7.3 | 1-8 |
| A | US 2016/0116605 A1 (THE UNIVERSITY OF CHICAGO) 28 April 2016 (2016-04-28) paragraphs [0153]-[0156] | 1-8 |

☐ Further documents are listed in the continuation of Box C.       ☑ See patent family annex.

| | |
|---|---|
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **11 September 2024** | **01 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/027663**

| Patent document cited in search report | | | Publication date (day/month/year) | Patent family member(s) | | | Publication date (day/month/year) |
|---|---|---|---|---|---|---|---|
| JP | 2018-44952 | A | 22 March 2018 | US | 9817134 | B1 | |
| | | | | column 7, lines 10-50, fig. 5 | | | |
| | | | | CN | 107817510 | A | |
| JP | 2010-527021 | A | 05 August 2010 | US | 2010/0219345 | A1 | |
| | | | | paragraphs [0032], [0046] | | | |
| | | | | US | 2016/0320496 | A1 | |
| | | | | WO | 2008/142590 | A2 | |
| | | | | EP | 2162762 | A2 | |
| | | | | CN | 101680953 | A | |
| | | | | RU | 2009146553 | A | |
| | | | | CN | 104076383 | A | |
| US | 2016/0116605 | A1 | 28 April 2016 | US | 2014/0183369 | A1 | |
| | | | | US | 2011/0220802 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DAM, H. T. VAN ; BORGHI, G. ; SEIFERT, S. ; SCHAART, D. R.** Sub-200 ps CRT in monolithic scintillator PET detectors using digital SiPM arrays and maximum likelihood interaction time estimation. *Phys Med Biol*, 2013, vol. 58, 3243-3257